# EUROPÄISCHE PATENTANMELDUNG

(11) **EP 3 913 445 A1**
(43) Veröffentlichungstag der Anmeldung: **24.11.2021**
(21) Anmeldenummer: 20175687.1
(22) Anmeldetag: 20.05.2020
(51) Int. Cl.: G05B 19/042, G05B 19/418, G05B 23/02

(54) **ALARMBEDINGTE DARSTELLUNG VON TRENDVERLAUFDIAGRAMMEN IM KONTEXT EINES BEDIENENS UND BEOBACHTENS EINER TECHNISCHEN ANLAGE**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein computerimplementiertes Verfahren zum Darstellen von Bedieninformationen im Kontext eines Bedienens und Beobachtens einer technischen Anlage, welche wenigstens einen Operator Station Server (2) und einen Operator Station Client (3) aufweist, das Verfahren umfassend:
a) Empfangen wenigstens eines Messwertes wenigstens eines technischen Objektes (8) der technischen Anlage mittels des Operator Station Servers (2);
b) Für den Fall, dass in dem Operator Station Server (2) ein Alarm auftritt, der sich auf den Messwert bezieht, Erzeugung eines Trendverlaufs des Messwerts;
c) Übertragung des Trendverlaufs von dem Operator Station Server (2) zu dem Operator Station Client (3);
d) Visuelle Darbietung Trendverlaufs an einen Operator der technischen Anlage in einem Trendverlaufdiagramm (12).

## Beschreibung

Die Erfindung betrifft ein computerimplementiertes Verfahren zum Darstellen von Bedieninformationen im Kontext eines Bedienens und Beobachtens einer technischen Anlage, welche wenigstens einen Operator Station Server und einen Operator Station Client aufweist, nach Anspruch 1. Zudem betrifft die Erfindung ein Leitsystem für eine technische Anlage, insbesondere Fertigungsanlage oder Prozessanlage, welches wenigstens einen Operator Station Server und einen Operator Station Client aufweist, wobei der Operator Station Server dazu ausgebildet ist, wenigstens einen Alarm zu erzeugen, der sich auf einen Messwert eines mit dem Leitsystem verbindbaren technischen Objektes der technischen Anlage bezieht, und wobei der Operator Station Server dazu ausgebildet ist, den Messwert von dem technischen Objekt zu empfangen, einen Trendverlauf des Messwertes zu erzeugen und den Trendverlauf an den Operator Station Client zu übertragen, um den Trendverlauf einem Operator der technischen Anlage visuell in einem Trendverlaufdiagramm darzubieten, nach Anspruch 6.

Für die Bedienung, Beobachtung und das Alarmmanagement verfahrenstechnischer Anlagen werden Operatoren dynamisierte Anlagenbilder und unterschiedliche grafische Ansichten zur Darstellung von Trendverläufen oder von Alarmsequenzen von Prozessobjekten angeboten. Treten Alarme auf, so können die Operatoren eines Leitsystems diese in den unterschiedlichen Alarmanzeigen des Leitsystems - z.B. in den Meldefolgeanzeigen der Anlagenbilder - wahrnehmen.

Für eine Analyse der Alarmursache navigiert der Operator in der Regel manuell zum Anlagenbild, in dem das Blocksymbol des alarmgebenden Prozessobjekts enthalten ist, um den verfahrenstechnischen Kontext zu erfassen, und um das Faceplate des Prozessobjekts für mögliche Korrekturen zu öffnen. Der verfahrenstechnische Kontext kann beispielsweise eine Trendanzeige sein, in der derjenige Prozesswert als Kurve visualisiert ist, der beispielsweise den Alarm hervorgerufen hat.

Das Ziel des Operatoren ist es demnach, möglichst effizient den Prozesswert(-Verlauf) zu evaluieren, um die Ursache des Alarms zu verstehen und um die passenden Korrekturen abzuleiten. Durch die zuvor beschriebene und nach dem Stand der Technik etablierte Navigation im Leitsystem geht jedoch wertvolle Zeit verloren, insbesondere falls mehrere Alarme gleichzeitig anstehen und der Operator für Analyse und Korrektur auch noch priorisieren muss.

In der DE 10 2006 019 099 A1 ist eine Vorrichtung zur Darstellung von Prozessmesswerten offenbart.

Die EP 3 076 254 A1 offenbart ein Verfahren zum Betrieb eines Leitsystems für einen technischen Prozess, bei dem Prozesswerte zur Visualisierung an einen hierfür ausgebildeten Operator Station Client übertragen werden.

Der Erfindung liegt die Aufgabe zugrunde, ein computerimplementiertes Verfahren zum Darstellen von Bedieninformationen im Kontext eines Bedienens und Beobachtens einer technischen Anlage anzugeben, welches ein effizientes und zielgerichtetes Alarmmanagement der technischen Anlage ermöglicht.

Die zuvor formulierte Aufgabe wird durch ein computerimplementiertes Verfahren zum Darstellen von Bedieninformationen im Kontext eines Bedienens und Beobachtens einer technischen Anlage mit den Merkmalen des Anspruchs 1 gelöst. Die technische Anlage weist dabei wenigstens einen Operator Station Server und einen Operator Station Client auf. Das Verfahren weist erfindungsgemäß die folgenden Verfahrensschritte auf:
a) Empfangen wenigstens eines Messwertes wenigstens eines technischen Objektes der technischen Anlage mittels des Operator Station Servers;
b) Für den Fall, dass in dem Operator Station Server ein Alarm auftritt, der sich auf den Messwert bezieht, Erzeugung eines Trendverlaufs des Messwerts;
c) Übertragung des Trendverlaufs von dem Operator Station Server zu dem Operator Station Client;
d) Visuelle Darbietung Trendverlaufs an einen Operator der technischen Anlage in einem Trendverlaufdiagramm.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen können über ein Leitsystem oder zumindest ein computerunterstütztes Modul zur Steuerung und Regelung des ablaufenden Prozesses oder der Produktion verfügen. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann sogenannte prozessnahe Komponenten, die zur Ansteuerung von Aktoren bzw. Sensoren dienen, umfassen. Darüber hinaus kann das Leitsystem u.a. Mittel zur Visualisierung der Prozessanlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen. Bei dem Operator Station Server kann es sich, ohne sich darauf zu beschränken, um einen SIMATIC PCS 7 Industrial Workstation Server der Firma SIEMENS handeln.

Der zu dem Operator Station Server gehörige Operator Station Client kann auf die Daten (Archive, Meldungen, Tags, Variablen) des Operator Station Servers zugreifen und Bilder eines Betriebs der technischen Anlage auf einem hierfür geeigneten Anzeigegerät visuell darstellen. Zudem verfügt er über Eingabemittel, die der Bedienung der technischen Anlage durch einen Operator dienen. Unter den Begriff "Bedieninformationen" sind beispielsweise visuelle Darstellungen von Messwerten der technische Anlage oder anwählbare Steueranweisungen zu fassen, die der Operator mittels des Operator Station Clients an den Operator Station Server richten kann.

Unter einem Operator wird ein menschlicher Bediener der technischen Anlage verstanden. Der Operator interagiert mittels spezieller Benutzerschnittstellen (beispielsweise mittels des Operator Station Clients) mit der technischen Anlage bzw. dessen Leitsystem und steuert spezielle technische Funktionen der technischen Anlage.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Der Begriff "Alarm" wird vorliegend in synonymer Weise zu dem Begriff "Alarmmeldung" verwendet, d.h. es wird keine Unterscheidung zwischen den beiden Begriffen vorgenommen. Eine Alarmmeldung ist dabei eine Meldung, die eine, in der Regel unverzügliche, Reaktion eines Operators der technischen Anlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Der Operator Station Server empfängt in an sich bekannter Weise Messwerte von wenigstens einem technischen Objekt der technischen Anlage, beispielsweise einem Temperatursensor. Diese Messwerte nutzt er dazu, einen Trendverlauf zu erzeugen und diesen dem Operator mittels des Operator Station Clients zum Zwecke des Bedienens und Beobachtens visuell darzubieten. Der Trendverlauf umfasst einen zeitlichen Verlauf des Messwertes. Es kann sich um einen tatsächlichen Trendverlauf handeln, d.h. der Trendverlauf basiert auf real gemessenen Messwerten. Der Operator Station Server kann den Trendverlauf alternativ aber auch teilweise oder vollständig mittels einer Interpolation von historischen Werten des Messwertes erzeugen. Hierzu kann ein mathematisches Verfahren wie beispielsweise eine Polynominterpolation verwendet werden.

Wesentlich ist, dass der Trendverlauf für den Messwert nur dann erzeugt wird, wenn in dem Operator Station Server ein Alarm auftritt, der sich auf den Messwert bezieht. Auf diese Weise wird der Operator nur über die Prozesswerte effizient informiert, die unmittelbar einen aktiven Alarm verursachen.

Es versteht sich dabei, dass es sich bei dem Begriff "Operator Station Server" nicht um einen einzigen Server handeln muss, sondern vielmehr auch eine Mehrzahl an Servern als ein "Operator Station Server" agieren können. Beispielsweise kann der Alarm an einen ersten Server gemeldet oder dort erzeugt werden, während die Erzeugung des Trendverlaufs dann auf einem zweiten Server erfolgt.

Das Verfahren ist nicht auf das Empfangen eines einzigen Messwertes beschränkt. Vielmehr kann eine Mehrzahl an Messwerten empfangen werden. Es lassen sich dabei verschiedene Bedingungen (beispielsweise im Rahmen eines Engineerings der technischen Anlage) festlegen, bei welchen Messwerten ein zu dem Messwert auftretender Alarm zu einer Erzeugung des dazugehörigen Trendverlaufs führt. Beispielsweise können alle Alarme, die mit Messwerten korrespondieren, deren zugrunde liegende technische Objekte in einem technischen Zusammenhang stehen bzw. zusammenwirken, als auslösende Bedingung für eine Anzeige der dazugehörigen Trendverläufe definiert werden.

Besonders bevorzugt wird der Trendverlauf (nur) solange erzeugt, an den Operator Station Client übertragen und dort dem Operator visuell dargeboten, bis der Alarm beendet wird. Dadurch lassen sich auf der einen Seite Ressourcen des Operator Station Servers schonen und auf der anderen Seite kann der Operator effizient und einfach darauf hingewiesen werden, dass der Alarm, der den zuvor dargestellten Trendverlauf betraf, erledigt wurde.

Im Rahmen einer vorteilhaften Weiterbildung der Erfindung wird dem Operator für den Fall, dass er mit dem Trendverlaufdiagramm interagiert, mittels des Operator Station Clients eine digitale Repräsentation des technischen Objektes, welches dem Trendverlaufdiagramm zugrunde liegt, visuell dargeboten. Zwecks einer Alarmbehandlung kann demnach durch Interaktion mit der dargestellten Trendkurve (beispielsweise durch ein "Klicken") das jeweilige Faceplate des technischen Objekts geöffnet werden, zu dem der visualisierte Messwert gehört.

Bevorzugt wird der erzeugte Trendverlauf in einem Archiv eines Leitsystems der technischen Anlage hinterlegt. Dies hat insbesondere dann eine Bedeutung, wenn wenigstens teilweise interpolierte Werte des Messwertes zur Darstellung des Trendverlaufs verwendet wurden. Da ein Operator auf Grundlage eines interpolierten Messwertes eine Bedienungsentscheidung treffen kann, dient die Archivierung des Trendverlaufs der späteren Rückverfolgbarkeit.

Die zuvor erläuterte Aufgabe wird zudem gelöst durch ein Leitsystem einer technischen Anlage, insbesondere Fertigungsanlage oder Prozessanlage, welches wenigstens einen Operator Station Server und einen Operator Station Client aufweist, wobei der Operator Station Server dazu ausgebildet ist, wenigstens einen Alarm zu erzeugen, der sich auf einen Messwert eines mit dem Leitsystem verbindbaren technischen Objektes der technischen Anlage bezieht, und wobei der Operator Station Server dazu ausgebildet ist, den Messwert von dem technischen Objekt zu empfangen, einen Trendverlauf des Messwertes zu erzeugen und den Trendverlauf an den Operator Station Client zu übertragen, um den Trendverlauf einem Operator der technischen Anlage visuell in einem Trendverlaufdiagramm darzubieten.

Das Leitsystem ist erfindungsgemäß dadurch gekennzeichnet, dass der Operator Station Server dazu ausgebildet ist, den Trendverlauf des Messwertes nur dann zu erzeugen und an den Operator Station Client zu übertragen, wenn ein Alarm in dem Operator Station Server auftritt, der sich auf den Messwert bezieht.

Bevorzugt ist das dabei der Operator Station Server dazu ausgebildet, den Trendverlauf solange zu erzeugen und an den Operator Station Client zur visuellen Darbietung an den Operator zu übertragen, bis der Alarm beendet wird.

Besonders bevorzugt ist der der Operator Station Client dazu ausgebildet ist, dem Operator für den Fall, dass er mit dem Trendverlaufdiagramm interagiert, eine digitale Repräsentation des technischen Objektes, welches dem Trendverlaufdiagramm zugrunde liegt, visuell darzubieten.

Im Rahmen einer vorteilhaften Weiterbildung des Leitsystems ist der Operator Station Server dazu ausgebildet, den Trendverlauf des wenigstens einen Messwertes teilweise oder vollständig mittels einer Interpolation von historischen Werten des Messwertes zu erzeugen.

Bei einer weiteren vorteilhaften Weiterbildung des Leitsystems ist der Operator Station Server dazu ausgebildet, den Trendverlauf des wenigstens einen Messwertes in einem Archiv des Leitsystems der technischen Anlage zu hinterlegen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: eine Architektur eines Leitsystems einer technischen Anlage;
- FIG 2: einen Trendverlauf eines Messwertes gemäß einem ersten Aspekt; und
- FIG 3: einen Trendverlauf eines Messwertes gemäß einem zweiten Aspekt.

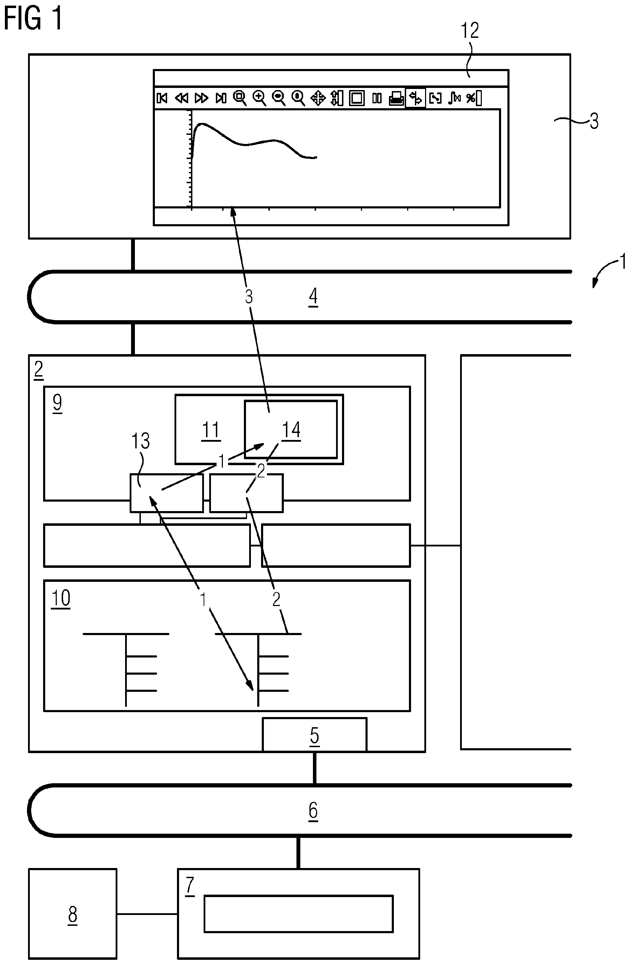

In FIG 1 ist ein Teil eines erfindungsgemäßen Leitsystems 1 einer Prozessanlage dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Clients 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber kann der Operator System Server 2 mit einem Automatisierungsgerät 7 des Leitsystems 1 kommunizieren. Der Anlagenbus 6 kann, ohne sich darauf zu beschränken, beispielsweise als Industrial Ethernet ausgebildet sein. Das Automatisierungsgerät 7 weist eine Verbindung zu einem technischen Objekt 8 auf.

In dem Operator Station Server 2 ist ein Visualisierungsdienst 9 integriert, über den eine Übertragung von (Visualisierungs-)Daten an den Operator Station Client 3 erfolgen kann. Zudem weist der Operator Station Server 2 ein Prozessabbild (Process Image) 10 der Prozessanlage auf.

Der Operator Station Server 2 empfängt im normalen Betriebsmodus mittels des Automatisierungsgeräts 7 Messwerte von dem technischen Objekt 8. Die Messwerte werden in dem Prozessabbild 10 des Operator Station Servers 2 hinterlegt. Ein Trenddienst 11, der ein Teil des Visualisierungsdienstes 9 darstellt, liest die Messwerte aus dem Prozessabbild 11, erzeugt hieraus einen Trendverlauf und übermittelt den Trendverlauf an den Operator Station Client 3, welcher den Trendverlauf in Form eines Trendverlaufdiagramms 12 einem Operator der technischen Anlage darbietet.

Überschreitet ein Messwert beispielsweise einen bestimmten Schwellwert, wird eine Alarmmeldung bzw. ein Alarm in dem Prozessabbild 10 des Operator Station Servers 2 hinterlegt. Ein Alarmdienst 13 des Operator Station Servers 2 erkennt das Auftreten des Alarms und meldet diese Information an einen Unterdienst 14 des Trenddienstes 11 (Schritt "1"). Der Unterdienst 14 liest aus dem Prozessabbild 10 die Information aus, welcher Messwert zu dem erzeugten Alarm bzw. der erzeugten Alarmmeldung gehört (Schritt "2"). Diese Information wurde zuvor in einer Engineering-Phase der Prozessanlage in dem Prozessabbild 10 hinterlegt. Diesen Messwert liest er dann kontinuierlich aus dem Prozessabbild 10 aus. Dabei kann der Unterdienst 14 dem Prozessabbild 10 auch weitere Informationen entnehmen, die für die visuelle Darstellung des Trendverlaufdiagramms 12 des Messwertes notwendig sind oder eine sinnvolle Ergänzung darstellen, wie z.B. die physikalische Einheit (°C, bar...), Skalierungen, bevorzugte Farben und dgl.

Gegebenenfalls kann der Unterdienst 14 über weitere Informationen verfügen (wo hat er die her bzw. wo liest er die aus?), die ihm anzeigen, dass er neben dem zu dem eigentlichen Alarm gehörigen Messwert noch weitere, insbesondere verfahrenstechnisch mit dem Messwerte verbundene bzw. in Wirkverbindung stehende Messwerte aus dem Prozessabbild 10 auslesen soll. Die Visualisierung der Trendkurven beschränkt sich dabei auf den Zeitraum, für den auch ein jeweiliger Alarm mit einhergeht. Ist der Alarm beendet bzw. erledigt, wird die Darstellung des Messwertes in dem Trendverlaufdiagramm 12 beendet. Will der Operator direkt das dem jeweiligen Trendverlaufdiagramm zugehörige technische Objekt 8 analysieren, kann er dies durch eine geeignete Interaktion mit dem Trendkurvendiagramm (beispielsweise durch ein "Anklicken" des Trendverlaufs) triggern. Damit öffnet er das jeweilige, sogenannte Faceplate des technischen Objektes, sprich dessen digitale Repräsentation, mit der der Operator in an sich bekannter Weise interagieren kann.

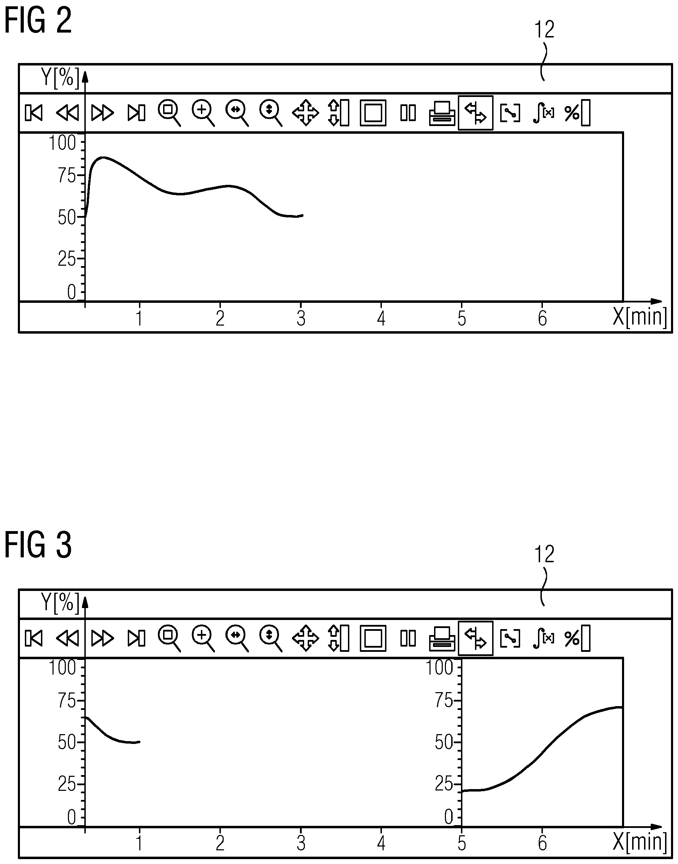

FIG 2 zeigt ein beispielhaftes Trendverlaufdiagramm 12 eines beliebigen Messwerts einer als Prozessanlage ausgebildeten technischen Anlage. Das Trendverlaufdiagramm 12 umfasst einen zeitlichen Verlauf des Messwertes (Zeit in Minuten in X-Richtung, auf einen Maximalwert von 100% normierter Wert in Y-Richtung). Das Trendverlaufdiagramm 12 zeigt den aktuellen Verlauf des Messwertes. Die Darstellung des Trendverlaufdiagramms 12 wurde im vorliegenden Beispiel dadurch getriggert, dass der Messwert einen Schwellwert von 50% des Maximalwertes überschritten hat. Zu diesem Zeitpunkt wurde ein entsprechender Alarm in dem Leitsystem 1 der Prozessanlage ausgelöst und die visuelle Darstellung des Trendverlaufdiagramms 12 initiiert. Nach 3 min wurde der Alarm beendet, so dass ab diesem Zeitpunkt kein Trendverlauf des Messwertes erzeugt wird und dieser entsprechend nicht mehr im Trendverlaufdiagramm 12 dargestellt wird.

FIG 3 zeigt ein weiteres beispielhaftes Trendverlaufdiagramm 12. Das Trendverlaufdiagramm 12 zeigt den aktuellen Verlauf des Messwertes. Auf der linken Seite des Trendverlaufdiagramms 12 ist ein zurückliegender Trendverlauf des Messwertes zu erkennen, dessen Darstellung durch Beendigung des dazugehörigen Alarms beendet wurde (die Kurve "bricht ab"). Auf der rechten Seite des Trendverlaufdiagramms 12 wurde eine neue Darstellung des Trendverlaufs des Messwertes getriggert, indem der Messwert einen Schwellwert von 25% des Maximalwertes überschritten hat. Es ist daher möglich, in einem gemeinsamen Trendverlaufdiagramm 12 Trendverläufe von Messwerten darzustellen, die durch verschiedene Alarme bedingt wurden. Es muss sich dabei nicht notwendigerweise um denselben Messwert eines technischen Objekts handeln. Vielmehr können die Messwerte explizit verschiedenen technischen Objekten zugeordnet sein.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zum Darstellen von Bedieninformationen im Kontext eines Bedienens und Beobachtens einer technischen Anlage, welche wenigstens einen Operator Station Server (2) und einen Operator Station Client (3) aufweist, das Verfahren umfassend:
a) Empfangen wenigstens eines Messwertes wenigstens eines technischen Objektes (8) der technischen Anlage mittels des Operator Station Servers (2);
b) Für den Fall, dass in dem Operator Station Server (2) ein Alarm auftritt, der sich auf den Messwert bezieht, Erzeugung eines Trendverlaufs des Messwerts;
c) Übertragung des Trendverlaufs von dem Operator Station Server (2) zu dem Operator Station Client (3);
d) Visuelle Darbietung Trendverlaufs an einen Operator der technischen Anlage in einem Trendverlaufdiagramm (12).

2. Computerimplementiertes Verfahren nach Anspruch 1, bei dem der Trendverlauf solange erzeugt, an den Operator Station Client (3) übertragen und dort dem Operator visuell dargeboten wird, bis der Alarm beendet wird.

3. Computerimplementiertes Verfahren nach Anspruch 1 oder 2, bei dem dem Operator für den Fall, dass er mit dem Trendverlaufdiagramm (12) interagiert, mittels des Operator Station Clients (3) eine digitale Repräsentation des technischen Objektes (8), welches dem Trendverlaufdiagramm (12) zugrunde liegt, visuell dargeboten wird.

4. Computerimplementiertes Verfahren nach einem der vorangegangenen Ansprüche, bei dem der Trendverlauf des Messwertes in einem Archiv eines Leitsystems (1) der technischen Anlage hinterlegt wird.

5. Computerimplementiertes Verfahren nach einem der vorangegangenen Ansprüche, bei dem der Trendverlauf des Messwertes teilweise oder vollständig mittels einer Interpolation von historischen Werten des Messwertes erzeugt wird.

6. Leitsystem (1) für eine technische Anlage, insbesondere Fertigungsanlage oder Prozessanlage, welches wenigstens einen Operator Station Server (2) und einen Operator Station Client (3) aufweist, wobei der Operator Station Server (2) dazu ausgebildet ist, wenigstens einen Alarm zu erzeugen, der sich auf einen Messwert eines mit dem Leitsystem verbindbaren technischen Objektes (8) der technischen Anlage bezieht, und wobei der Operator Station Server (2) dazu ausgebildet ist, den Messwert von dem technischen Objekt (8) zu empfangen, einen Trendverlauf des Messwertes zu erzeugen und den Trendverlauf an den Operator Station Client (3) zu übertragen, um den Trendverlauf einem Operator der technischen Anlage visuell in einem Trendverlaufdiagramm (12) darzubieten,
**dadurch gekennzeichnet, dass**
der Operator Station Server (2) dazu ausgebildet ist, den Trendverlauf des Messwertes nur dann zu erzeugen und an den Operator Station Client (3) zu übertragen, wenn ein Alarm in dem Operator Station Server (2) auftritt, der sich auf den Messwert bezieht.

7. Leitsystem (1) nach Anspruch 6, bei dem der Operator Station Server dazu ausgebildet ist, den Trendverlauf solange zu erzeugen und an den Operator Station Client (3) zur visuellen Darbietung an den Operator zu übertragen, bis der Alarm beendet wird.

8. Leitsystem (1) nach Anspruch 6 oder 7, bei dem der Operator Station Client (3) dazu ausgebildet ist, dem Operator für den Fall, dass er mit dem Trendverlaufdiagramm (12) interagiert, eine digitale Repräsentation des technischen Objektes (8), welches dem Trendverlaufdiagramm (12) zugrunde liegt, visuell darzubieten.

9. Leitsystem (1) nach einem der Ansprüche 6 bis 8, bei dem der Operator Station Server (2) dazu ausgebildet ist, den Trendverlauf des wenigstens einen Messwertes teilweise oder vollständig mittels einer Interpolation von historischen Werten des Messwertes zu erzeugen.

10. Leitsystem (1) nach einem der Ansprüche 6 bis 9, bei dem der Operator Station Server (2) dazu ausgebildet ist, den Trendverlauf des wenigstens einen Messwertes in einem Archiv des Leitsystems (1) der technischen Anlage zu hinterlegen.
